Europäisches Patentamt

European Patent Office

Office européen des brevets

(19)

(11) Veröffentlichungsnummer: **0 235 520 B1**

(12) **EUROPÄISCHE PATENTSCHRIFT**

(45) Veröffentlichungstag der Patentschrift: 03.07.91

(21) Anmeldenummer: 87100557.5

(22) Anmeldetag: 16.01.87

(51) Int. Cl.⁵: **A22C** 11/06, B65B 37/00,
B67C 11/00, A22C 11/02

(54) **Vorrichtung zum Abfüllen eines verformbaren und fliessfähigen Füllgutes.**

(30) Priorität: 24.02.86 DE 3605896

(43) Veröffentlichungstag der Anmeldung:
09.09.87 Patentblatt 87/37

(45) Bekanntmachung des Hinweises auf die
Patenterteilung:
03.07.91 Patentblatt 91/27

(84) Benannte Vertragsstaaten:
AT BE CH DE ES FR GB GR IT LI LU NL SE

(56) Entgegenhaltungen:
DE-A- 3 406 605
DE-C- 571 108
US-A- 2 718 344

(73) Patentinhaber: Frey, Albert
Fischerstrasse 21
W-7922 Herbrechtingen(DE)

(72) Erfinder: Frey, Albert
Fischerstrasse 21
W-7922 Herbrechtingen(DE)

(74) Vertreter: Dipl.-Phys.Dr. Manitz Dipl.-Ing.,
Dipl.-W.-Ing. Finsterwald Dipl.-Ing. Grämkcw
Dipl.-Chem.Dr. Heyn Dipl.-Phys. Rotermund
Morgan, B.Sc.(Phys.) Robert-Koch-Strasse 1
W-8000 München 22(DE)

## Beschreibung

Die Erfindung betrifft eine Vorrichtung zum Abfüllen eines verformbaren und fließfähigen Füllgutes, insbesondere von Restmengen einer Wurstmasse, bestehend aus einem Fülltrichter sowie einer auf den Auslaß des Fülltrichters folgenden, mit einer Vakuumquelle verbindbaren Einfüllkammer, aus der das Füllgut mittels einer Portioniervorrichtung in vorgebbaren Mengen ausgetragen wird.

Eine Vorrichtung dieser Art ist beispielsweise bekannt aus der DE-A- 34 06 605. Solche Vorrichtungen sind zum Füllen von Behältern, Tuben, Därmen und dergleichen mit pastösem Gut geeignet, wobei kontinuierlich und diskontinuierlich zu beschickende Ausführungsformen solcher Vorrichtungen verwendet werden.

Bei allen Arten dieser Vorrichtungen wird angestrebt, die im jeweiligen Füllgut enthaltene Luft möglichst vollständig zu beseitigen, da Lufteinschlüsse zu einer Qualitätsverschlechterung des abzufüllenden Gutes führen können und deshalb sehr unerwünscht sind. Aus diesem Grunde wird auch bei bekannten Maschinen mit Vakuum gearbeitet und versucht, Oberflächen- und Gefügeluft zu beseitigen.

Bei allen mit Einfülltrichter und in diesem Einfülltrichter umlaufendem Förder-Rührwerk arbeitenden Vorrichtungen treten dann Schwierigkeiten in der Weiterverarbeitung bzw. beim Transport des Füllgutes auf, wenn die sich jeweils im Trichter befindende Restmenge so gering ist, daß im Füllgut bzw. Brät sich etwa mittig eine durchgehende Öffnung bildet und damit das anliegende Vakuum auch nicht mehr einziehend wirksam sein kann.

In diesem Falle dreht sich zwar der umlaufende Rührwerksarm weiter, er ist aber nicht in der Lage, den Rest des Füllgutes in die Einfüllkammer zu transportieren. In diesem Falle muß dann die Vorrichtung abgestellt und im Regelfall der Rest des Füllgutes von Hand nach unten in die Einfüllkammer geschoben werden.

Dies ist besonders dann störend, wenn - wie dies in der Praxis häufig vorkommt - nacheinander verhältnismäßig geringe Mengen an Brät unterschiedlicher Art verarbeitet werden müssen. In diesen Fällen tritt nicht nur der Nachteil auf, daß schon nach relativ kurzer Zeit der automatische Befüllvorgang nicht mehr funktioniert, sondern es ist auch ungünstig, daß im Regelfall die gesamte Maschine und vor allem das Rührwerk aufwendig gereinigt werden muß, bevor die nächste Portion verarbeitet werden kann. Müssen beispielsweise nacheinander stark farbiges Brät und eine Weißwurstfüllung verarbeitet werden, dann sind an die Reinigung besonders hohe, nur mit entsprechendem Zeitaufwand zu erfüllende Anforderungen zu stellen.

Aufgabe der Erfindung ist es, eine Vorrichtung der eingangs angeführten Art in der Weise auszubilden, daß auf technisch besonders einfache und mit geringem Aufwand zu realisierende Weise auch kleinere Mengen an Füllgut vollständig und praktisch vollautomatisch verarbeitet werden können, ein manuelles Eingreifen während des Füllvorganges ausgeschaltet wird und der bisher erforderliche Reinigungsaufwand beim Übergang von einem Brät zum nächsten ganz wesentlich verringert wird.

Gelöst wird diese Aufgabe nach der Erfindung im wesentlichen dadurch, daß in den Fülltrichter ein zylindrisches Einfüllrohr koaxial und abdichtend einsetzbar ist und daß in dem Einfüllrohr eine eine wandernde Abschlußwand bildende, an der Innenwand des Einfüllrohres abdichtend geführte Deckelanordnung vorgesehen ist.

Durch die Verwendung eines zylindrischen Fülltrichters wird zunächst das Füllvolumen im Vergleich zum Trichter wesentlich verringert, was gerade im Hinblick auf die zu verarbeitenden Restmengen von Vorteil ist. Entscheidend ist aber die Ausnutzung des anliegenden Unterdrucks zum Verfahren der im Einfüllrohr abdichtend geführten Deckelanordnung. Wird nämlich das Füllgut durch das Vakuum nach unten gezogen, so wandert die Deckelanordnung in gleicher Weise mit, wobei diese Deckelanordnung das Füllgut von der Wandung abstreift und sicherstellt, daß kein Einbruch des Vakuums aufgrund einer sich ausbildenden Öffnung zur Atmosphäre erfolgen kann. Die mitwandernde Deckelanordnung stellt vielmehr sicher, daß die gesamte Restmenge in die Einfüllkammer überführt wird und demgemäß jegliches Nachschieben von Hand entfällt. Damit wird auch die Sicherheit der Gesamtvorrichtung erhöht, da es nicht mehr möglich ist, bei unvorsichtiger Arbeitsweise in eine beispielsweise aus einer Flügelzellenoder Schraubenpumpe bestehende Portioniereinrichtung zu greifen.

Um nach erfolgtem Befüllungsvorgang die Deckelanordnung wieder einfach aus dem Einfüllrohr entfernen zu können, ist sie vorzugsweise mit einem manuell betätigbaren Belüftungsventil versehen.

Da bei einer Vielzahl bekannter Vorrichtungen dieser Art im jeweiligen Fülltrichter ein einschraubbares Rührwerk vorgesehen ist, wird das Einfüllrohr in diesen Fällen bevorzugt so ausgebildet, daß es - nach Entfernung des Rührwerks - mit dem Rührwerksgewinde verschraubbar ist. Dreht sich während des Betriebs dann das Einfüllrohr entsprechend dem sonst vorhandenen Rührwerk, so führt dies zu keinerlei Nachteil.

Diese Lösung ist auch deshalb von Vorteil, weil sie eine Nachrüstung bereits vorhandener Maschinen entsprechend der vorliegenden Erfindung ermöglicht und es dann gestattet, mit diesen vorhandenen Maschinen Restmengen einwandfrei zu verarbeiten.

Nach einer weiteren vorteilhaften Ausgestaltung der Erfindung ist das Abdichtteil der Deckelanordnung an seiner innenliegenden Seite formmäßig zumindest im wesentlichen komplementär zum Übergangsraum zwischen Fülltrichter und Einfüllkammer ausgebildet, wodurch eine zwangsläufige, vollständige Überführung des Füllgutes in die Füllkammer sichergestellt ist.

Weitere vorteilhafte Ausgestaltungen der Erfindung sind in Unteransprüchen angeführt.

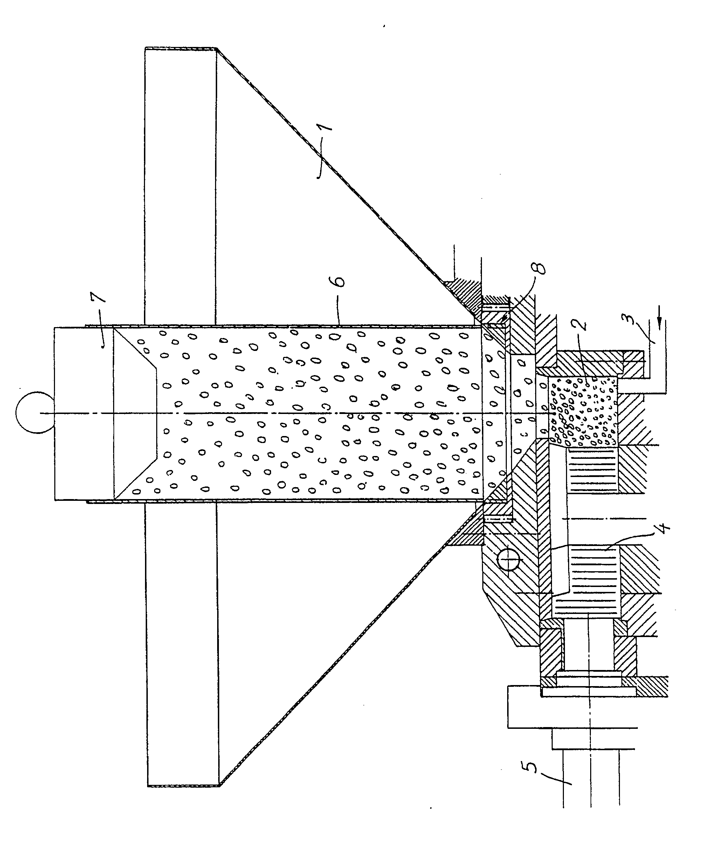

Ein Ausführungsbeispiel der Erfindung wird nachfolgend anhand der Zeichnung erläutert; die einzige Figur der Zeichnung zeigt eine schematische Teilschnittdarstellung einer Vorrichtung nach der Erfindung.

Nach der Zeichnung ist ein Fülltrichter 1 üblicher Bauart vorgesehen, über den das jeweilige Füllgut zu einer Einfüllkammer 2 transportiert wird, die unter Vakuum steht, da sie über eine Verbindungsleitung 3 an eine Vakuumpumpe angeschlossen ist.

Aus der Einfüllkammer 2 wird das jeweilige Füllgut mittels einer Portioniervorrichtung 4, bei der es sich um eine Flügelzellenpumpe, Schraubenpumpe, eine Kolbenanordnung und dergleichen handeln kann, zu einem Füllrohr 5 gefördert.

Bei normalem Betrieb der bisher beschriebenen Vorrichtung ist im Fülltrichter 1 ein in der Zeichnung nicht dargestelltes Rührwerk angeordnet, das sicherstellen soll, daß das Füllgut der Einfüllkammer 2 kontinuierlich zugeführt wird.

Gemäß der Erfindung ist mit der Gewindeaufnahme 8, die für das Rührwerk vorgesehen ist, ein zylindrisches Einfüllrohr 6 verschraubt. Dieses Füllrohr 6 dient zur Aufnahme vergleichsweise geringer Mengen, bzw. Restmengen an Brät.

In dem Einfüllrohr ist eine Deckelanordnung 7 vorgesehen, die eine beim Abfüllvorgang mitlaufende Abschlußwand bildet. Diese Deckelanordnung 7 ist auch mit einem integrierten Ventil versehen, das es gestattet, nach Beendigung des Abfüllvorgangs eine Belüftung des Innenraums des Einfüllrohrs 6 vorzunehmen, um auf diese Weise das Entfernen der Deckelanordnung 7 zu ermöglichen.

Die Deckelanordnung 7 ist bezüglich der Innenwand des Einfüllrohrs 6 abgedichtet und mit ausreichend langen Führungsflächen versehen, um ein kippfreies Verschieben der Deckelanordnung im Rohr 6 sicherzustellen.

Wenn bei Betrieb der Vorrichtung das Brät durch das anliegende Vakuum nach unten gezogen wird, so wandert die Deckelanordnung 7 mit, da zwischen Innenseite und Außenseite der Differenzdruck zwischen Vakuum und Atmosphäre wirksam ist. Die einfüllkammerseitige Kontur der Deckelanordnung 7 ist bevorzugt komplementär zum Übergangsbereich zwischen Trichter und Einfüllkammer ausgebildet, d.h. es wird auf diese Weise eine praktisch vollständige Überführung des Bräts vom Einfüllrohr 6 in die Einfüllkammer 2 gewährleistet.

Die Reinigung der erfindungsgemäßen Anordnung ist außerordentlich einfach und auch schnell durchzuführen, was einen wesentlichen Vorteil darstellt, wenn aufeinanderfolgend verschiedene kleine Mengen verarbeitet werden müssen.

Ferner ist es von wesentlicher Bedeutung, daß die jeweilige Restmenge innerhalb des Einfüllrohrs 6 sehr genau definiert ist und man dadurch auch durch eine evtl. Computersteuerung exakte Umschaltzeitpunkte definieren kann.

Ein Nachrüsten vorhandener Maschinen ist ebenfalls möglich, da bei vorhandenen Maschinen die jeweiligen Rührwerke herausgeschraubt und in die entsprechenden Schraubaufnahmen Einfüllrohre nach der Erfindung eingesetzt werden können.

## Ansprüche

1. Vorrichtung zum Abfüllen eines verformbaren und fließfähigen Füllgutes, insbesondere von Restmengen einer Wurstmasse, bestehend aus einem Fülltrichter (1) sowie einer auf den Auslaß des Fülltrichters folgenden, mit einer Vakuumquelle verbindbaren Einfüllkammer (2), aus der das Füllgut mittels einer Portioniervorrichtung (4) in vorgebbaren Mengen ausgetragen wird, dadurch **gekennzeichnet,** daß in den Fülltrichter (1) ein zylindrisches Einfüllrohr (6) koaxial und abdichtend einsetzbar ist und daß in dem Einfüllrohr (6) eine eine wandernde Abschlußwand bildende, an der Innenwand des Einfüllrohres abdichtend geführte Deckelanordnung (7) vorgesehen ist.

2. Vorrichtung nach Anspruch 1, dadurch **gekennzeichnet,** daß in der Deckelanordnung (7) ein insbesondere manuell betätigbares Belüftungsventil vorgesehen ist.

3. Vorrichtung nach Anspruch 1, dadurch **gekennzeichnet,** daß das Einfüllrohr (6) mit dem Fülltrichter (1) insbesondere über dessen Rührwerksgewinde (8) verschraubbar ist.

4. Vorrichtung nach einem der vorhergehenden Ansprüche, dadurch **gekennzeichnet,** daß die herausnehmbare Deckelanordnung (7) über zumindest einen O-Ring an der Innenwand des Einfüllrohres (6) abgedichtet ist.

5. Vorrichtung nach Anspruch 4, dadurch **gekennzeichnet,** daß die Deckelanordnung (7) aus einem innenseitigem Abdichtteil und einem außenseitigem Führungsteil besteht.

6. Vorrichtung nach Anspruch 5, dadurch **gekennzeichnet,** daß das Führungsteil aus mehreren mit dem Abdichtteil verbundenen Führungsfahnen besteht.

7. Vorrichtung nach einem der vorhergehenden Ansprüche, dadurch **gekennzeichnet,** daß das Abdichtteil der Deckelanordnung (7) an seiner innenliegenden Seite formmäßig zumindest im wesentlichen komplementär zum Übergangsraum zwischen Fülltrichter (1) und Einfüllkammer (2) ausgebildet ist.

8. Vorrichtung nach einem der vorhergehenden Ansprüche, dadurch **gekennzeichnet,** daß als Portioniereinrichtung (4) eine Flügelzellen-, Schrauben-, oder Kolbenpumpe und dergleichen vorgesehen ist.

## Claims

1. Apparatus for dispensing a deformable and flowable filling material, in particular residual quantities of sausage meat, the apparatus comprising a filling funnel (1) and also a filling chamber (2) which follows the outlet of the filling funnel and can be connected to a vacuum source, with the filling material being dispensed in predetermined quantities by means of a portioning device (4), characterised in that a cylindrical filling tube (6) is coaxially insertable in sealed manner into the filling funnel (1); and in that a lid arrangement (7) is provided in the filling tube (6), is sealingly guided at the inner wall of the filling tube and forms a wandering terminal wall.

2. Apparatus in accordance with claim 1, characterised in that an aeration valve, in particular a manually actuatable aeration valve, is provided in the lid arrangement (7).

3. Apparatus in accordance with claim 1, characterised in that the filling tube (6) can be screwed inside the filling funnel (1), in particular into the thread (8) thereof provided for receiving a stirrer.

4. Apparatus in accordance with one of the preceding claims, characterised in that the removable lid arrangement (7) is sealed at the inner wall of the filling tube (6) via at least one O-ring.

5. Apparatus in accordance with claim 4, characterised in that the lid arrangement (7) comprises an inner side sealing part and an outer side guide part.

6. Apparatus in accordance with claim 5, characterised in that the guide part consists of a plurality of guide vanes connected to the sealing part.

7. Apparatus in accordance with one of the preceding claims, characterised in that the sealing part of the lid arrangement (7) is shaped at its inner side so that it is substantially complementary in shape to the transition space between the filling funnel (1) and the filling chamber (2).

8. Apparatus in accordance with one of the preceding claims, characterised in that a vane-cell pump, a screw pump or a piston pump or the like is provided as the portioning device.

## Revendications

1. Dispositif pour le remplissage d'un produit transformable et fluide, en particulier de quantités restantes d'une masse de charcuterie, comprenant une trémie de remplissage (1) ainsi qu'une chambre de remplissage (2) placée à la sortie de la trémie de remplissage et pouvant être connectée à une source de vide, le produit de remplissage étant extrait de la chambre de remplissage en quantités prédéterminables au moyen d'un dispositif de portionnement (4), caractérisé en ce qu'un tube de remplissage cylindrique (6) peut être introduit coaxialement et de manière étanche dans la trémie de remplissage (1), et en ce qu'un organe formant couvercle (7) constituant une paroi de fermeture mobile et guidé de manière étanche le long de la paroi intérieure du tube de remplissage est prévu à l'intérieur du tube de remplissage (6).

2. Dispositif selon la revendication 1, caractérisé en ce qu'une valve de mise à l'air est prévue dans l'organe formant couvercle (7), en particulier une valve de mise à l'air à actionnement manuel.

3. Dispositif selon la revendication 1, caractérisé en ce que le tube de remplissage (6) peut être vissé sur la trémie de remplissage (1), en particulier au moyen de la prise taraudée de l'organe de brassage (8) de cette dernière.

4. Dispositif selon l'une des revendications précédentes, caractérisé en ce que l'organe formant couvercle (7) extractible est étanché le long de la paroi intérieure du tube de remplissage (6) au moyen d'au moins un joint torique.

5. Dispositif selon la revendication 4, caractérisé en ce que l'organe formant couvercle (7) consiste en une partie d'étanchéité intérieure et une partie de guidage extérieure.

6. Dispositif selon la revendication 5, caractérisé en ce que la partie de guidage comprend plusieurs ailettes de guidage reliées à la partie d'étanchéité.

7. Dispositif selon l'une des revendications précédentes, caractérisé en ce que la partie d'étanchéité de l'organe formant couvercle (7) est réalisée à sa face intérieure sous une forme au moins essentiellement complémentaire à la zone de transition entre la trémie de remplissage (1) et la chambre de remplissage (2).

8. Dispositif selon l'une des revendications précédentes, caractérisé en ce que le dispositif de portionnement 4 est une pompe à ailettes, une pompe à vis, une pompe à piston ou similaire.